Europäisches Patentamt

(19) European Patent Office

Office européen des brevets

(11) Publication number: **0 101 349**
**A1**

(12) **EUROPEAN PATENT APPLICATION**

(21) Application number: **83401473.0**

(22) Date of filing: **18.07.83**

(51) Int. Cl.³: **F 16 H 1/32**

(30) Priority: **02.08.82 FR 8213657**
**09.11.82 FR 8219022**

(43) Date of publication of application:
**22.02.84 Bulletin 84/8**

(84) Designated Contracting States:
**AT BE CH DE GB IT LI LU NL SE**

(71) Applicant: **Durand, François**
**11, rue du bateau**
**F-06600 Antibes(FR)**

(72) Inventor: **Durand, François**
**11, rue du bateau**
**F-06600 Antibes(FR)**

(74) Representative: **Hautier, Jean-Louis**
**Cabinet Hautier Office Méditerranéen de Brevets**
**d'Invention 24 rue Masséna**
**F-06000 Nice(FR)**

(54) **Planetory gear box with eccentrics.**

(57) A planetary gearing with eccentrics comprising at least two gears (37, 45) with circular movement meshing with the same internally toothed output ring gear (8), each gear (37, 45) getting its circular movement from at least two eccentrics (18, 21) having their axes of rotation parallel and equally spaced from the output shaft axis, the eccentrics (18, 21) of one gear (37) being angularly displaced from the eccentrics (40, 22) of the other gear (45), the wall of the housing (1) taking the reaction force from the eccentrics (17, 20), support shafts (11, 12) being held in bushes (9, 10) in the wall of the housing and penetrating inside the interior of the output ring gear (8) and serving as supports for the bearings (13, 14 e 15, 16) of the eccentrics (17, 20), each eccentric (17, 20) being driven by at least one gear wheel (23, 25), driven synchronously by the input gear (27) which is journalled in the housing wall, the gear wheels (23, 25) being secured by a pin (50) to a shoulder generated on the eccentrics.

EP 0 101 349 A1

./...

Fig. 1

The present invention relates to a planetary gear box with eccentrics having at least two geared wheels driven with a circular movement meshing with a gear ring having internal teeth, the gear ring being connected to the output shaft.

This planetary gear box uses the known principle having for each gear wheel circular movement at least two eccentrics wich are equal and located at the same distance from the output shaft axis. The axis of those eccentrics are parallel to the output shaft ; this principle is known particularly by the french patent 2.214.841. For gear boxes using this principle, the output torque, also a big torque, is transmited to the housing over the eccentrics, this brings the eccentrics bearings to support important loads, loads wich are increased by the bending torques when the bearings of the eccentrics are located in the housing wall, as indicated on patent 2.214.841. This present invention is to reduce volume of the gear box and to minimise the loads on the eccentrics bearings, reducing drasticaly the loads due to the bending moments on the eccentrics. The invention is the fact that the housing face wich overtake the reaction efforts generated by the eccentrics supports holding pins wich are tailed in this face, those holding pins penatrate inside the gear ring with internal teeth and are used as supports for the bearings of annular eccentrics. The bearings of the eccentrics being located nearly in the same plane as the meshing forces between gear wheels and gear ring and the supporting pins being tailed in the housing, the bending moments are not transmited to the housing by rotating parts but by static parts ; those static parts are penatrating inside the geared ring, this reduces the volume of the gear box and reduces drasticaly the efforts on rotating parts. Each annular eccentric ring is at least a double eccentric, each eccentric being displaced 180° tward the other ; each eccentric support partly in a known maner a geared wheel with circular movement. Each annular eccentric ring is driven at least by a geared wheel meshing with the input pinion. The same input pinion drives the different annular eccentric rings. In case of double eccentric ring with 180° logging, the geared wheel is fixed to the double eccentric ring by pin and bolts using the partial shoulder generated by one of the eccentrics, on the other side of the eccentric ring, a shoulder plate is fixed by bolts to the other partial shoulder generated by the other eccentric. The distance between the shoulder surfaces of the eccentric driving geared wheel and the shoulder plate toward the double eccentric ring is such that the two geared wheel with circular movement located beween the shoulder surfaces of the eccentric driving geared wheel and the shoulder plate are axialy maintained with enough backlash to move freely relatively to each other during their circular movements. The present invention, both as to its organization and manner of operation, together with further objects and advantages thereof, may best be understood by reference to the following description, taken in connection with the accompanying drawings.

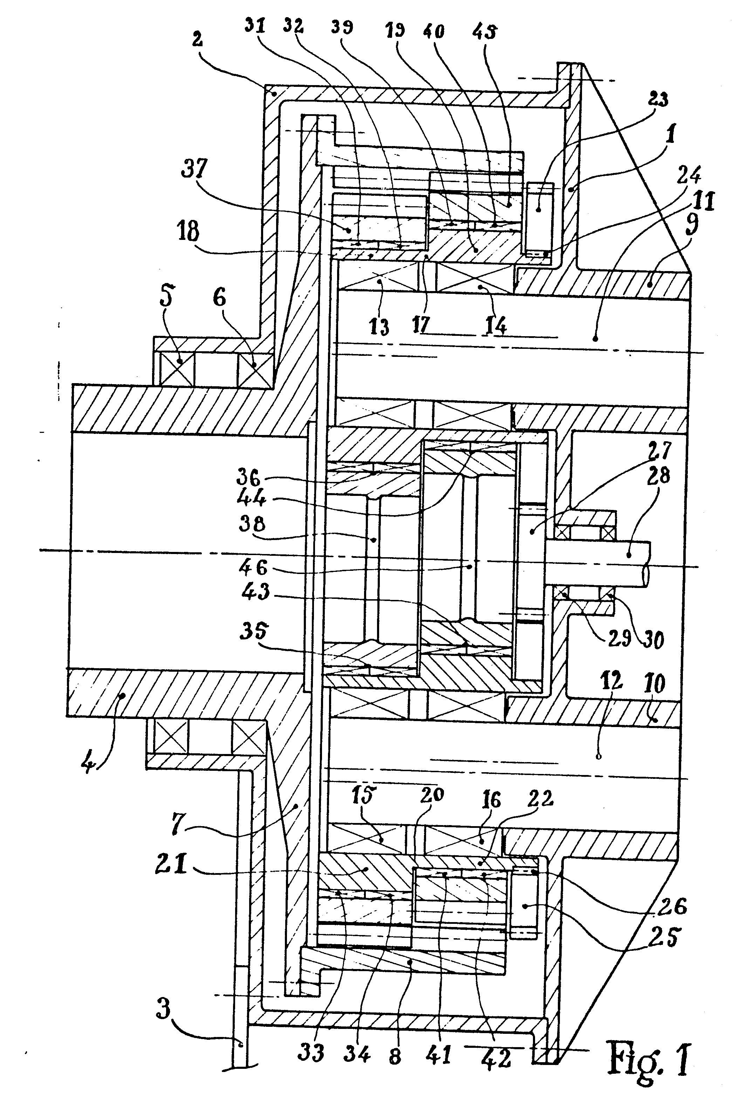

Fig. 1 is a longitudinal transverse section passing through the commun plane to the rotation axis of the two double eccentrics as well as the rotation axis of the input and output shaft. As exemple it is a gear box with an hollow out put shaft. For simplification covers, seals and axial abutments are not shown on this drawing.

Fig. 2 is a half side vue of a geared wheel with circular movement.

Fig. 3 is a tranverse section passing through the axis of a double eccentric with fixation of the eccentric driving geared wheel and shoulder plate.

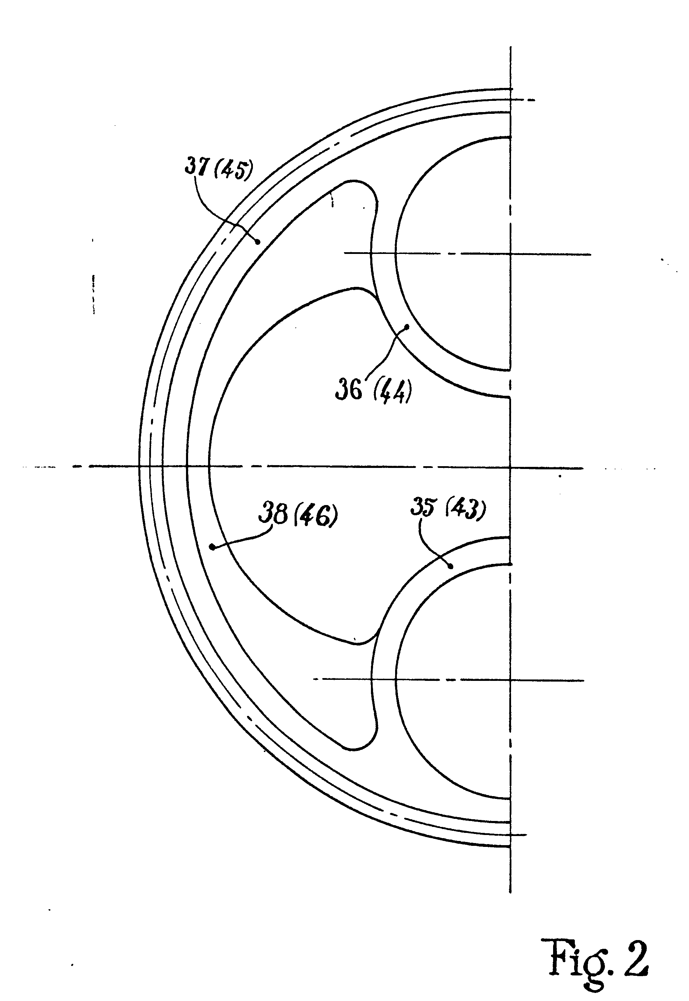

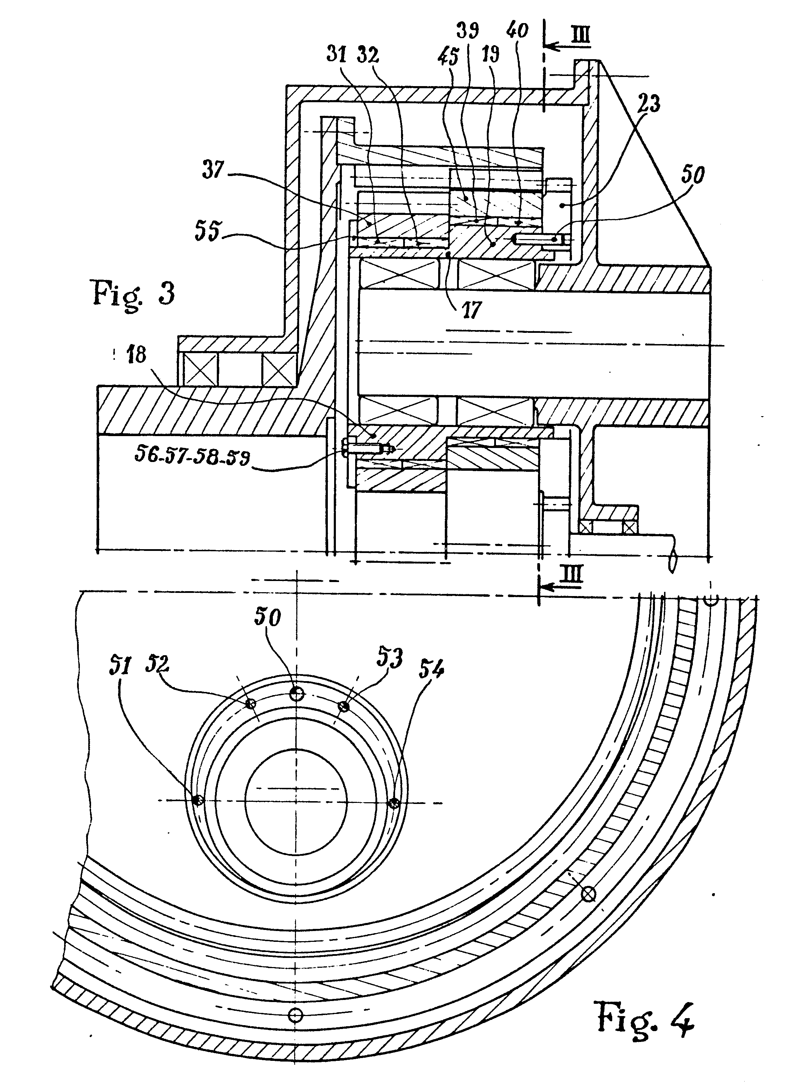

Fig. 4 is a transverse section passing through line III III of fig. 3 showing the fixation of the eccentric driving geared wheel on the eccentric ring. 1 is the housing wall on wich the pins 11 and 12 are tailed by means of bushings 9 and 10, 2 is the other part of the housing on wich the torque arm 3 is bolted. Housing part 2 is journaled on the output hollow shaft 4 by the means of bearings 5 and 6. Hollow shaft 4 has a cheek 7 on wich the geared ring with internal teeth 8 is bolted. Bushings 9 and 10 are well connected one to the other and to the housing wall 1 by means of ribs. Pin 11 supports the bearings 13 and 14, pin 12 supports the bearings 15 and 16. Bearings 13 and 14 are journaled inside the annular double eccentric 17 for wich 18 is one eccentric and 19 the other, eccentrics 18 and 19 are displaced 180° one toward the other and have the same value for the setting over. Bearings 15 and 16 are journaled inside the annular double eccentric 20 for wich 21 is one eccentric and 22 is the other, eccentrics 21 and 22 are displaced 180° one toward the other and have exactly the same setting over as eccentrics 18 and 19. Geared wheel 23 is fixed on double eccentric 17 by means of key 24 and geared wheel 25 is fixed on double eccentric 20 by means of key 26. Pinion 27, as a part of input shaft 28 meshes with geared wheels 23 and 25 ; input shaft 28 is journaled in housing 1 by means of bearings 29 and 30. Usualy input shaft 28 has the same rotation axis as the output shaft but it is not necessary, input shaft 28 must only be parallel and at the same distance from the rotation axis of the double eccentrics 17 and 20, this for spur or helical cylindric pinion and gear wheels. If pinion 27 and geared wheels 23 and 25 are replaced by bevel or worm gears, it is clear that the arrangement would be different, each bevel or worm wheed would then have its own bevel pinion or worm driven by the same shaft. The eccentrics 18 and 21 support respectively bearings 31, 32 and 33, 34 wich are journaled in the bores 35 and 36 of geared wheel 37 for wich 38 is a connecting rib between bores 35 and 36. The eccentrics 19 and 22 support respectively the bearings 39, 40 and 41, 42 wich are journaled in the bores 43 and 44 of geared wheel 45 for wich 46 is a connecting rib between bores 43 and 44. Connecting ribs 38 and 46 can be seen on Fig.2, their profile is such that a small error for the center distance between pins 11 and 12, error due to manufacturing tolerances, make the geared wheels 37 and 45 to become slightly oval without overloading to much the eccentrics bearings. It is easy to see that the eccentrics 17 and 20 driven by pinion 27 and geared wheels 23 and 25 rotates in sychronism with the same direction and give to the geared wheels 37 and 45 the circular movements that drive at slow speed the gear ring 8. Teeth reactions between geared wheels 37,45 and gear ring 8 are compensated one to the other to give a torque on the output shaft, only a small tilding moment due to the small distance between geared wheels 37 and 45 has to be taken over by the bearings 5 and 6 of housing part 2. The reactions of bearings 13, 14 and 15, 16 on pins 11 and 12 are transmited to housing 1 and form the tilding moment that is taken over by the torque arme 3. Bearings 5 and 6 support the reaction effort located at the extremity of torque arm 3, this reaction effort is in a well known maner a direct fonction of the length of torque arme 3. It is clear that without changing to the invention, it is possible to have a longer input shaft 28 passing through geared wheels 37 and 45 and to have the geared wheels 23 and 25 as well as pinion 27 between cheek 7 and the end of pins 11 and 12, this increase the with of geared ring 8 but can simplify the tailing of pins 11 and 12 in bushings 9 and 10. On Fig. 3 and 4, 50 is the driving pin for eccentric 17 with geared wheel 23; 51, 52, 53 and 54 are bolts to fix geared wheel 23 on generated shoulder of eccentric 19. Shoulder plate 55 is fixed on generated shoulder of eccentric 18 by the means of bolts 56, 57, 58 and 59. The distance beween the connecting faces of geared wheel 23 and shoulder plate 55 is such that geared wheels 37 and 45 to wich the eccentrics 18 and 19 give a circular movement can move freely in regard one to each other having a sufficient but limited axial backlash between the connecting faces of geared wheel 25 and shoulder plate 55. It is easy to see that the assembly of the two geared wheels with circular movements 37 and 45 between geared wheel 23 and

-4-

shoulder plate 55 is a very simple and low cost assembly, double eccentric 17 being perfectly driven in rotation by the means of geared wheel 23 and pin 50.

CLAIMS

1.  A planetary gear box with eccentrics having at least two geared wheels (37,45) with circular movement meshing with the same out put gear ring with internal teeth (8),  each geared wheel (37,45) getting its circular movement,  in a known maner, from at least two eccentrics (17,20) having their rotation axis parallel to the output shaft,  the eccentrics from one geared wheel being displaced toward the eccentrics of the others geared wheels for wich the housing wall ( 1) wich over take the reactions from the eccentrics (18,19 and 21,22) supports pins (11,12) wich are tailed in bushings (9,10) of the housing wall (1),  the pins (11,12) penetrating inside the output geared ring (8) and supporting the bearings (13,14 and 15,16) of the annular multi eccentrics (17,20),  bearings wich are located close to the planes in wich the meshing reactions are locate, each annular eccentric (17,20) being driven by at least a geared wheel (23,25) those geared wheels (23,25) being driven in synchronism by the input pinion (27) wich is journaled in the housing wall (1).

2. Planetary gear box with eccentrics having two geared wheels(37,45) with circular movement meshing with the same output geared ring with internal teeth (8),  each geared wheel (37,45) getting its circular movement from two annular double eccentrics (17,20) having their rotation axis parallel to the output shaft,  the two eccentrics (18,19 and 21,22) from each annular double eccentric (17,20) being displaced 180°,  each double eccentric being driven in rotation in synchronism toward the other by the means of a geared wheel (23,25) wich is bolted and secured by a pin (50) on the shoulder generated by the eccentrics (19,22),  both geared wheels (37,45) being axialy free but limitated in their small axial displacement on one side by the bolted geared wheels (23,25) and on the other side by a shoulder plate (55) wich is bolted on the shoulder generated by the other eccentric (18,21) of each annular double eccentric (17,20).

Fig. 1

37 (45)

36 (44)

38 (46)

35 (43)

Fig. 2

Fig. 3

Fig. 4

0101349

**EUROPEAN SEARCH REPORT**

Application number

EP 83 40 1473

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | BE-A- 354 015 (HEAP et al.) <br> * Whole document * | 1 | F 16 H 1/32 |
| A | FR-A-2 024 274 (LANSING BAGNALL LTD.) <br> * Whole document * | 1 | |
| A,D | FR-A-2 214 841 (AGINFOR AG.) <br> * Whole document * | 1 | |

TECHNICAL FIELDS
SEARCHED (Int. Cl. 3)

F 16 H

The present search report has been drawn up for all claims

| Place of search <br> THE HAGUE | Date of completion of the search <br> 23-08-1983 | Examiner <br> HARRISON M.C. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82